# FASCICULE DE BREVET EUROPEEN

(11) **EP 3 455 687 B1**
(45) Date de publication et mention de la délivrance du brevet: **29.07.2020**
(21) Numéro de dépôt: 17721412.9
(22) Date de dépôt: 09.05.2017
(51) Int. Cl.: G05D 1/02

(54) **PROCÉDÉ DE GESTION DE DÉPLACEMENTS D'UNE FLOTTE D'OBJETS MOBILES AUTONOMES, PROCÉDÉ DE DÉPLACEMENT D'UN OBJET MOBILE AUTONOME, DISPOSITIFS ET PRODUITS PROGRAMME D'ORDINATEUR CORRESPONDANTS**
VERFAHREN ZUR VERWALTUNG DER BEWEGUNGEN EINER FLOTTE VON AUTONOMEN MOBILEN OBJEKTEN, VERFAHREN ZUR BEWEGUNG EINES AUTONOMEN MOBILEN OBJEKTES, ENTSPRECHENDE VORRICHTUNGEN UND COMPUTERPROGRAMME
METHOD FOR MANAGING MOVEMENTS OF A FLEET OF AUTONOMOUS MOBILE OBJECTS, METHOD FOR MOVEMENT OF AN AUTONOMOUS MOBILE OBJECT, CORRESPONDING DEVICES AND COMPUTER PROGRAM PRODUCTS

(30) Priorité: 10.05.2016 FR 1654163
(43) Date de publication de la demande: 20.03.2019
(73) Titulaire: iFollow, 92190 Meudon (FR)
(72) Inventeur: JACQUEMART, Vincent, 92190 Meudon (FR)
(74) Mandataire: Vidon Brevets & Stratégie
(86) Numéro de dépôt international: PCT/EP2017/061041
(87) Numéro de publication internationale: WO 2017/194532

(56) Documents cités:
- JP-B1- 3 009 395
- KR-A- 20160 011 390
- KR-A- 20160 020 454
- US-A1- 2014 249 693

## Description

### 1 DOMAINE TECHNIQUE

Le domaine de l'invention est celui des objets mobiles autonomes (c'est-à-dire aptes à se déplacer par eux-mêmes dans un environnement donné), configurés pour se déplacer au sol, par exemple en roulant.

Plus précisément, l'invention concerne une méthode de gestion des déplacements d'objets mobiles autonomes appartenant à une flotte de tels objets, un utilisateur équipé d'un terminal étant associé à au moins un objet mobile autonome de la flotte en question, ainsi que la méthode correspondante de déplacement d'un objet mobile autonome d'une telle flotte.

Du fait du nombre croissant d'applications envisagées mettant en œuvre des objets mobiles autonomes, l'invention a de nombreuses applications, notamment, mais non exclusivement, dans les domaines des chariots de transport, par exemple les chariots de bagages dans une gare ou un aéroport, ou les chariots de courses dans une grande surface du type supermarché, ou encore dans le domaine des servantes utilisées dans une usine de production, ou bien même dans le domaine des bagages comme celui des valises mobiles autonomes.

### 2 ARRIERE-PLAN TECHNOLOGIQUE

Des objets mobiles autonomes sont connus dans différents domaines. A titre d'exemple, on peut citer :
- le caddy de golf « CaddyTrek » déjà commercialisé sur certains sites spécialisés ;
- la valise autonome dévoilée par la société israélienne « NUA Robotics » ; ou encore
- le chariot de courses autonome développé par la société texane « Chaotic Moon » et destiné à équiper des grandes surfaces du type supermarché.

Tous ces objets mobiles autonomes connus sont destinés à suivre un utilisateur donné. Pour ce faire, une technique répandue consiste à baser ce suivi sur la qualité de réception par l'objet suiveur (i.e. le caddy de golf, la valise ou le chariot de course dans les exemples cités ci-dessus) d'un signal émis par l'utilisateur, par exemple d'un signal radiofréquence émis par une balise équipant l'utilisateur. Différents critères peuvent alors être envisagés pour trianguler le signal reçu par l'objet suiveur, par exemple sur la base d'un niveau de signal reçu, ou d'une différence de temps d'arrivée. L'objet suiveur estime de la sorte à la fois la direction dans laquelle se trouve l'utilisateur ainsi que la distance à laquelle ce dernier se trouve. Il peut alors mettre en œuvre des moyens de déplacement afin de se rapprocher de l'utilisateur.

Pour les objets mobiles autonomes les plus perfectionnés, des moyens annexes sont également prévus pour gérer leur déplacement tout en évitant les collisions. Par exemple, des caméras permettant d'élaborer des cartes de profondeur sont parfois prévues pour permettre à l'objet mobile de détecter la position d'obstacles potentiels non équipés de balises émettrices, à la différence des utilisateurs, dans le but de pouvoir modifier leur trajectoire en conséquence.

Cependant, un inconvénient majeur de ces techniques connues réside dans la limitation des déplacements autorisés pour l'objet mobile en question, qui, par construction, ne cherche qu'à suivre l'utilisateur.

Par ailleurs, ces techniques connues sont dédiées au suivi d'un utilisateur donné par un objet mobile autonome particulier. Par conséquent, elles ne permettent pas une gestion optimisée des déplacements de plusieurs objets mobiles autonomes appartenant à une flotte de tels objets, comme c'est le cas par exemple pour une flotte de chariots de bagages dans une gare ou un aéroport, ou de chariots de courses dans un supermarché.

Il existe ainsi un besoin pour une méthode de gestion optimisée des déplacements d'objets mobiles autonomes appartenant à une flotte de tels objets.

Il existe également un besoin pour qu'une telle méthode offre une plus grande souplesse dans les déplacements des objets mobiles autonomes de la flotte.

Il existe enfin un besoin pour qu'une telle méthode conduise à une solution globale au coût maitrisé.

### 3 RESUME

Il est proposé un procédé de gestion de déplacements d'une flotte d'une pluralité d'objets mobiles autonomes configurés pour se déplacer au sol et aptes à communiquer avec un serveur de gestion, un objet mobile autonome étant associé à un terminal utilisateur équipant un utilisateur.

Selon un mode de réalisation de l'invention, le serveur de gestion exécute les étapes suivantes, pour un objet mobile autonome donné, dit premier objet, associé à un premier terminal utilisateur équipant un premier utilisateur:
- obtention d'une information représentative d'une position à atteindre par le premier objet, dite information de destination premier objet ;
- détermination d'une information représentative d'un déplacement à effectuer par le premier objet, dite information de déplacement premier objet, la détermination prenant en compte au moins l'information de destination premier objet ;
- transmission de l'information de déplacement premier objet au premier objet.

Ainsi, l'invention propose une solution nouvelle et inventive pour permettre la gestion des déplacements des objets mobiles autonomes configurés pour se déplacer au sol (par exemple des objets mobiles autonomes roulants du type chariot de courses, chariot de bagages, servante ou bagage), appartenant à une flotte de tels objets associés à des utilisateurs munis de terminaux.

Pour ce faire, le procédé revendiqué propose de gérer les déplacements des objets de la flotte de manière centralisée via un serveur de gestion. Plus particulièrement, le serveur détermine une information de déplacement d'un objet mobile autonome sur la base d'une information de destination, puis transmet cette information de déplacement à l'objet mobile autonome en question permettant ainsi une plus grande souplesse quant aux destinations possibles de l'objet mobile autonome en question.

Par ailleurs, cette approche centralisée permet une gestion plus réactive et optimisée des déplacements des objets mobiles autonomes de la flotte, notamment via la possibilité de prendre en compte une quantité d'information plus importante disponible au niveau d'un serveur centralisé, comme la connaissance de la zone géographique dans laquelle se déplace la flotte d'objets mobiles autonomes.

La détermination des trajets et des vitesses bénéficie enfin de moyens de détermination qui peuvent être plus importants, car commun à l'ensemble des objets mobiles autonomes de la flotte, que ce qui peut être envisagé pour équiper un objet mobile autonome seul à un coût raisonnable. Le coût de la solution globale se trouve ainsi optimisé.

Par exemple, l'information de destination premier objet appartient au groupe comprenant :
- une information représentative de la position du premier terminal utilisateur, dite information de position premier utilisateur;
- une information représentative de la position d'un article ou d'une zone d'intérêt pour le premier utilisateur ;
- une information représentative d'une position résultant de la réponse à un défi transmis au premier utilisateur.

Ainsi, le procédé revendiqué permet de piloter les déplacements des objets de la flotte selon différents types de destinations.

Dans un mode de réalisation, l'information de destination d'un objet mobile autonome correspond à la position de l'utilisateur qui lui est associée, cette position de l'utilisateur étant accessible via la géolocalisation d'un terminal équipant cet utilisateur. L'objet mobile autonome est ainsi à même de suivre cet utilisateur.

Dans un autre mode de réalisation, l'information de destination d'un objet mobile autonome correspond à une position prédéterminée, résultant par exemple d'un choix de destination fait par l'utilisateur associé à cet objet via son terminal utilisateur (par exemple en réponse à un défi ou une question). Dans ce cas, le serveur de gestion transmet à l'objet mobile autonome en question une information de déplacement correspondant à la position prédéterminée pour que ce dernier s'y rende. Ainsi, dans ce mode de réalisation l'objet mobile autonome guide l'utilisateur jusqu'à la position prédéterminée.

Selon une caractéristique particulière de l'invention, l'étape de détermination de l'information de déplacement premier objet prend également en compte au moins une information représentative de la position d'un deuxième terminal utilisateur équipant un deuxième utilisateur associé à un deuxième objet mobile autonome de la flotte, dite information de position deuxième utilisateur, et/ou une information représentative de la position du deuxième objet mobile autonome, dite information de position deuxième objet.

Ainsi, la prise en compte, pour la détermination de l'information de déplacement d'un objet mobile autonome donné, de la position d'autres objets mobiles autonomes de la flotte et/ou de la position des utilisateurs (via leurs terminaux) correspondants permet d'optimiser les trajectoires des différents objets mobiles autonomes de la flotte tout en les sécurisant, par exemple en anticipant les croisements de trajectoires possibles, et donc les collisions potentielles entre objets mobiles autonomes et/ou utilisateurs.

Par exemple, l'information de position premier utilisateur ou l'information de position deuxième utilisateur ou l'information de position deuxième objet appartient au groupe comprenant :
- la position du premier utilisateur ou du deuxième utilisateur ou du deuxième objet ;
- les données permettant de déterminer la position du premier utilisateur ou du deuxième utilisateur ou du deuxième objet.

Ainsi, dans un mode de réalisation, le serveur de gestion reçoit directement les positions des utilisateurs et/ou des objets mobiles autonomes, permettant ainsi de se baser sur une infrastructure de géolocalisation déjà existante et éprouvée. Dans un second mode de réalisation, le serveur de gestion reçoit des données permettant de déterminer les positions des utilisateurs et/ou des objets mobiles autonomes, conduisant ainsi à une optimisation des ressources ainsi qu'à une plus grande souplesse dans la mise en œuvre de la détermination des positions en question pour l'application visée.

Par exemple, l'information de déplacement premier objet appartient au groupe comprenant :
- un mouvement de déplacement à effectuer par le premier objet ;
- l'information de destination premier objet.

Ainsi, dans un mode de réalisation, le serveur de gestion transmet à un objet mobile autonome directement les informations concernant le déplacement qu'il a à effectuer, permettant ainsi de baser la détermination de ce déplacement sur les informations centralisées par le serveur de gestion ainsi que sur sa puissance de calcul.

Dans un autre mode de réalisation, le serveur de gestion transmet à un objet mobile autonome la destination qu'il doit rejoindre et ce dernier détermine alors les déplacements à effectuer pour y arriver. Ceci permet de délester le serveur de gestion d'une partie de sa charge de calcul en laissant l'objet mobile en autonomie complète malgré des ressources plus limitées, par exemple lorsque la destination en question se trouve dans une zone peu fréquentée avec un risque associé, par exemple de collision, plus limité.

Selon un aspect particulier de l'invention, selon lequel le premier objet est également apte à détecter des obstacles, le serveur de gestion exécute en outre une étape de réception d'une information représentative de la détection d'au moins un obstacle par le premier objet et la détermination d'une information de déplacement premier objet prend également en compte l'information représentative de la détection de l'au moins un obstacle.

Ainsi, dans ce mode de réalisation, les objets mobiles autonomes de la flotte sont également aptes à détecter des obstacles, fixes ou mobiles, situés autour d'eux et à communiquer cette information au serveur de gestion.

Ces obstacles peuvent correspondre à des objets qui ne sont pas connus a priori du serveur de gestion (car ne faisant pas partie de la géographie connue du lieu, ou ne correspondant pas à des utilisateurs ou des objets mobiles autonomes référencés dans la flotte) et leur prise en compte pour la détermination de l'information de déplacement d'un objet mobile autonome donné permet d'optimiser et de sécuriser les trajectoires et les vitesses des différents objets mobiles autonomes de la flotte, par exemple en anticipant les collisions potentielles avec ces obstacles détectés.

Selon une caractéristique particulière de l'invention, le serveur de gestion exécute en outre une étape de transmission d'une information opérationnelle au premier objet et/ou au premier terminal utilisateur, l'information opérationnelle appartenant au groupe comprenant :
- Une offre commerciale sur un produit localisé à proximité du premier utilisateur ;
- Une information d'intérêt pour le premier utilisateur en lien avec un profil associé ;
- Une alerte associée à un évènement survenu à proximité du premier utilisateur.

Ainsi, le serveur de gestion peut utiliser sa connaissance de la position de l'utilisateur et/ou de l'objet mobile autonome pour lui transmettre différentes informations comme des offres commerciales lui permettant de prendre connaissance de promotions en cours, des informations d'intérêt en lien avec son profil (rappel des préférences d'option de voyage avant d'embarquer, offres sur des produits préférés...), des alertes concernant un évènement non attendu survenu à proximité du trajet qu'il doit emprunter.

L'invention concerne également un procédé de déplacement d'un objet mobile autonome comprenant les étapes de :
- réception d'une information de déplacement à effectuer;
- déplacement de l'objet mobile autonome, le déplacement prenant en compte l'information de déplacement à effectuer ;
et l'information de déplacement à effectuer correspond à une information de déplacement premier objet obtenue par la mise en œuvre d'un procédé de gestion de déplacements d'une flotte d'au moins un objet mobile autonome tel que décrit précédemment, par le serveur de gestion.

L'invention concerne également un produit programme d'ordinateur, comprenant des instructions de code de programme pour la mise en œuvre d'un procédé de gestion de déplacements d'une flotte d'une pluralité d'objets mobiles et/ou d'un procédé de déplacement d'un objet mobile tels que décrits précédemment, lorsque ledit programme est exécuté par un processeur.

L'invention concerne également un serveur de gestion de déplacements d'une flotte d'une pluralité d'objets mobiles autonomes aptes à communiquer avec un serveur de gestion, un objet mobile autonome étant associé à un terminal utilisateur équipant un utilisateur, comprenant :
- des moyens d'obtention d'au moins une information représentative d'une position à atteindre par un premier objet mobile autonome de la flotte, dite information de destination premier objet ;
- des moyens de détermination d'une information représentative d'un déplacement à effectuer par le premier objet mobile autonome, dite information de déplacement premier objet, les moyens de détermination étant aptes à prendre en compte au moins l'information de destination premier objet ;
- des moyens de transmission de l'information de déplacement premier objet au premier objet mobile autonome.

Un tel serveur de gestion de déplacements est notamment apte à mettre en œuvre le procédé de gestion de déplacements tel que décrit précédemment.

L'invention concerne également un objet mobile autonome configuré pour se déplacer au sol comprenant :
- des moyens de réception d'une information de déplacement à effectuer;
- des moyens de déplacement de l'objet mobile autonome, et des moyens de prise en compte de l'information de déplacement à effectuer;
- des moyens de communiquer avec un serveur de gestion tel que décrit précédemment, l'information de déplacement à effectuer correspondant à l'information de déplacement premier objet déterminée par les moyens de détermination.

Un tel objet mobile configuré pour se déplacer au sol est par exemple un objet mobile roulant du type chariot de courses, chariot de bagages, bagage mobile autonome (par exemple une valise), ou encore servante (comme on en trouve sur les chaines de montage d'une usine de production).

### 4 LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 illustre les étapes d'un procédé de gestion des déplacements d'objets mobiles autonomes dans une flotte de tels objets ;
- la figure 2 illustre un système de gestion des déplacements d'objets mobiles autonomes dans une flotte de tels objets selon un mode de réalisation de l'invention ;
- la figure 3 illustre un objet mobile autonome configuré pour se déplacer au sol selon un mode de réalisation de l'invention ;
- la figure 4 présente un exemple de structure d'un serveur de gestion selon un mode de réalisation particulier de l'invention.

### 5 DESCRIPTION DETAILLEE DE L'INVENTION

Sur toutes les figures du présent document, les éléments et étapes identiques sont désignés par une même référence.

Le principe général de la technique décrite consiste en l'obtention, par un serveur de gestion des déplacements d'objets mobiles autonomes appartenant à une flotte de tels objets, d'une information représentative d'une position à atteindre pour l'un des objets de la flotte. De la sorte, le serveur de gestion peut déterminer une information représentative d'un déplacement à effectuer par l'objet en question puis transmettre cette même information à l'objet en question.

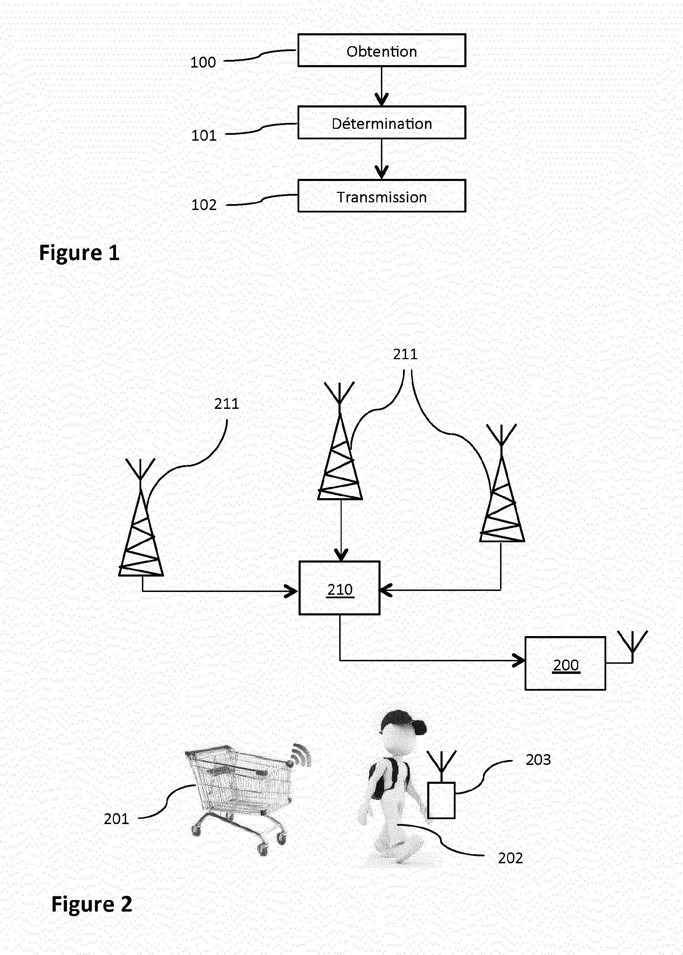

On décrit maintenant, en relation avec les **figures 1 et 2****,** une technique de gestion des déplacements d'objets mobiles autonomes configurés pour se déplacer au sol (par exemple en roulant entre un point de départ et un point d'arrivée donnés, et/ou en suivant un trajet au sol donné) dans une flotte de tels objets selon différents modes de réalisation de l'invention.

Lors d'une étape 100, un serveur de gestion 200 des déplacements d'objets mobiles autonomes configurés pour se déplacer au sol (par exemple des objets mobiles autonomes roulants du type chariot de courses, chariot de bagages, servante ou bagage) appartenant à une flotte de tels objets obtient une information représentative d'une position à atteindre, dite information de destination, par un objet mobile autonome 201 de la flotte en question, un utilisateur 202 équipé d'un terminal 203 étant associé à l'objet mobile autonome 201.

Dans le mode de réalisation illustré sur la figure 2, l'objet mobile autonome 201 est un chariot de courses comme on en trouve par exemple dans une grande surface du type supermarché. Dans des variantes, il peut également s'agir d'un chariot de bagages, ou bien directement d'un bagage mobile autonome, par exemple une valise, parmi plusieurs bagages du même type, comme on en trouve dans une gare ou un aéroport, ou encore d'une servante comme on en trouve sur les chaines de montage d'une usine de production.

Dans un mode de réalisation, le terminal 203 est apte à communiquer avec le serveur de gestion 200 via un lien radiofréquence, par exemple un lien Bluetooth, WiFi, cellulaire (2G, 3G, 4G...) ou tout lien radiofréquence équivalent. Dans une variante, l'information représentative d'une position à atteindre correspond à une position résultant d'un défi (ou d'une question) soumis par le serveur de gestion 200 à l'utilisateur 202 via le terminal 203, par exemple le choix d'un trajet parmi plusieurs possibles, ou bien la sélection d'un article. Dans d'autres variantes, l'information représentative d'une position à atteindre correspond, par exemple, à une zone d'embarquement à laquelle l'utilisateur 202 doit se rendre.

Dans un autre mode de réalisation, le terminal 203 est géolocalisable et l'information représentative d'une position à atteindre correspond à une position de l'utilisateur 202 équipé du terminal 203.

Dans une variante, le terminal 203 détermine sa propre position via une technologie embarquée de géolocalisation du type GPS, ou toute technique dite GNSS (pour « Global Navigation Satellite System » en anglais) équivalente. Ces techniques sont abordables à un coût faible du fait de leur large diffusion grand public mais restent particulièrement adaptées à la géolocalisation à l'extérieur des bâtiments, les satellites devant être en vue dégagée du récepteur pour un fonctionnement correct. La position du terminal 203 ainsi déterminée est alors transmise au serveur de gestion 200 avec lequel le terminal 203 est apte à communiquer.

Dans d'autres variantes, la position du terminal 203 est déterminée via un serveur de géolocalisation 210 sur la base d'une technique du type RTLS (pour « Real-time locating systems » en anglais) qui peut être déployée aussi bien à l'extérieur qu'à l'intérieur des bâtiments. Il peut s'agir d'un positionnement déterminé par triangulation, par exemple sur la base d'un niveau de signal radiofréquence reçu par des antennes 211 du système RTLS considéré, ou bien sur la base d'un temps d'arrivée sur les mêmes antennes 211. Le signal radiofréquence reçu en question peut être, par exemple, un signal Bluetooth, un signal WiFi, un signal cellulaire (2G, 3G, 4G...) ou tout signal radiofréquence équivalent. Dans une variante, le serveur de géolocalisation 210 détermine lui-même la position du terminal 203 et la transmet alors au serveur de gestion 200 avec lequel il est apte à communiquer, permettant par là-même de baser cette géolocalisation entièrement sur une technologie dédiée éprouvée. Dans une autre variante, le serveur de géolocalisation 210 transmet au serveur de gestion 200 les informations recueillies par le système RTLS et le serveur de gestion 200 détermine alors lui-même la position du terminal 203, offrant par là-même plus de souplesse dans la mise en œuvre de la détermination de la position pour l'application visée.

Lors d'une étape 101, le serveur de gestion 200 détermine une information représentative d'un déplacement au sol, dite information de déplacement, à effectuer par l'objet mobile autonome 201 sur la base de l'information de destination obtenue lors de l'étape 100.

Dans un mode de réalisation, l'information de déplacement correspond à un mouvement de déplacement au sol devant être effectué par l'objet mobile autonome 201. Ainsi, dans ce mode de réalisation, le serveur de gestion 200 détermine lui-même entièrement les déplacements au sol de l'objet mobile autonome 201, permettant ainsi de baser la détermination de ce déplacement sur les informations centralisées par le serveur de gestion (par exemple sur la connaissance du lieu de déplacement, comme la disposition des rayons dans un supermarché), ainsi que sur sa puissance de calcul.

Dans un autre mode de réalisation, l'information de déplacement correspond à l'information de destination obtenue lors de l'étape 100. Ainsi, dans ce mode de réalisation, l'objet mobile autonome 201 détermine lui-même les déplacements à effectuer pour se rendre à la position à atteindre, permettant ainsi de délester le serveur de gestion d'une partie de sa charge de calcul en laissant l'objet mobile en autonomie complète. Ce peut être par exemple lorsque la destination en question se trouve dans une zone peu fréquentée avec un risque de collision plus limité.

Dans un mode de réalisation, le serveur de gestion 200 détermine l'information de déplacement en prenant en compte la position d'autres objets mobiles autonomes de la flotte et/ou la position d'autres utilisateurs d'objets mobiles autonomes équipés de terminaux. Ainsi, le serveur de gestion 200 est apte à optimiser le trajet et la vitesse de l'objet mobile autonome 201 en prenant en compte la trajectoire des autres objets mobiles autonomes de la flotte ainsi que la position des utilisateurs associés. L'optimisation des déplacements est ainsi globale et le risque de collision minimale.

Dans une variante, les terminaux équipant les autres utilisateurs sont géolocalisables selon une des techniques décrites ci-dessus en relation avec l'étape 100.

Dans une autre variante, les objets mobiles autonomes de la flotte sont également géolocalisables selon une des mêmes techniques décrites ci-dessus en relation avec l'étape 100. Ainsi, quand bien même le serveur de gestion 200 connaît la position théorique des objets mobiles autonomes de la flotte puisque c'est lui qui leur transmet les informations représentatives de position à atteindre, une rétroaction permettant de mettre à jour la position des objets mobiles autonomes de la flotte sur la base de leur position réelle est possible au niveau du serveur de gestion 200 de manière à optimiser et sécuriser la gestion des différentes trajectoires devant être déterminées.

Ainsi, dans un mode de réalisation, l'objet mobile autonome 201 ainsi que le terminal 203 sont tout deux géolocalisables et aptes à échanger leur position respective, par exemple via un lien radiofréquence qui peut être, par exemple, un signal Bluetooth, un signal WiFi, un signal cellulaire (2G, 3G, 4G...) ou tout signal radiofréquence équivalent. Ainsi, quand bien même le serveur de gestion 200 gère les déplacements au sol des objets mobiles autonomes de la flotte, une rétroaction directe entre l'objet mobile autonome 201 et l'utilisateur 202 via le terminal 203 est possible de manière à sécuriser les déplacements, par exemple en cas de coupure de la communication entre le serveur de gestion 200 et l'objet mobile autonome 201 et/ou le terminal 203.

Dans un autre mode de réalisation, les objets mobiles autonomes de la flotte sont également aptes à détecter des obstacles situés autour d'eux, fixes ou mobiles, et à communiquer cette information au serveur de gestion 200. Ainsi, le serveur de gestion 200 est apte à optimiser et sécuriser le trajet et la vitesse des objets mobiles autonomes de la flotte en fonction de ces obstacles additionnels. Le serveur de gestion 200 est donc plus particulièrement apte à optimiser et sécuriser le trajet et la vitesse de l'objet mobile autonome 201 en prenant en compte la présence des obstacles additionnels situé à proximité de ce dernier.

Dans un autre mode de réalisation, l'objet mobile autonome 201 prend en compte lui-même les obstacles qu'il a détecté pour optimiser son trajet, que ce soit dans la variante où il détermine entièrement son déplacement sur la base de l'information de destination obtenue lors de l'étape 100, ou dans la variante où c'est le serveur de gestion 200 qui lui transmet directement le mouvement de déplacement lors de l'étape 100. Dans ce dernier cas, quand bien même le serveur de gestion 200 détermine le mouvement de déplacement de l'objet mobile autonome 201, ce dernier peut réagir rapidement en cas de risque de collision imminent par exemple.

Lors d'une étape 102, le serveur de gestion 200 transmet l'information de déplacement obtenue lors de l'étape 101 à l'objet mobile autonome 201.

Dans un mode de réalisation, l'objet mobile autonome 201 est apte à communiquer avec le serveur de gestion 200 via un lien radiofréquence, par exemple un lien Bluetooth, WiFi, cellulaire (2G, 3G, 4G...) ou tout lien radiofréquence équivalent.

Dans le mode de réalisation décrit en relation avec l'étape 100 où l'information de destination correspond à une position de l'utilisateur 202 équipé du terminal 203, le déplacement de l'objet mobile autonome 201 selon l'information de déplacement reçue du serveur de gestion 200 correspond alors à un fonctionnement « suiveur », l'objet mobile autonome 201 suivant effectivement l'utilisateur 202 équipé du terminal 203.

Alternativement, dans le mode de réalisation où l'information de destination correspond au résultat d'un défi soumis par le serveur de gestion 200 à l'utilisateur 202 via le terminal 203 ou à une zone où l'utilisateur 202 doit se rendre, l'objet mobile autonome 201 se déplace vers la position à atteindre indépendamment de la position relative de l'utilisateur 202. L'utilisateur 202 peut alors se laisser guider par l'objet mobile autonome 201 jusqu'à la zone et/ou l'objet de son choix ou d'intérêt.

Dans un mode de réalisation, le serveur de gestion 200 envoie en outre une information opérationnelle à l'objet mobile autonome 201 et/ou au terminal 203. Dans des variantes, l'information opérationnelle correspond à une offre commerciale sur un produit localisé à proximité de l'utilisateur 202, à une alerte associée à un évènement survenu à proximité de l'utilisateur 202, ou à toute autre information d'intérêt pour l'utilisateur 202. Ainsi, le serveur de gestion 200 met à profit sa capacité à communiquer avec les objets mobiles autonomes de la flotte et/ou avec les terminaux équipant les utilisateurs, ainsi que sa connaissance de leurs positions pour diffuser des informations opérationnelles d'intérêt. Dans des variantes, le serveur de gestion 200 a à sa disposition le profil de l'utilisateur 202, par exemple son profil commercial, de manière à affiner l'information opérationnelle qui lui est transmise en fonction de ce profil. Dans ce cas, il peut s'agir par exemple d'un rappel sur les options de voyage préférées avant d'embarquer ou d'offres sur des produits préférés lors de courses.

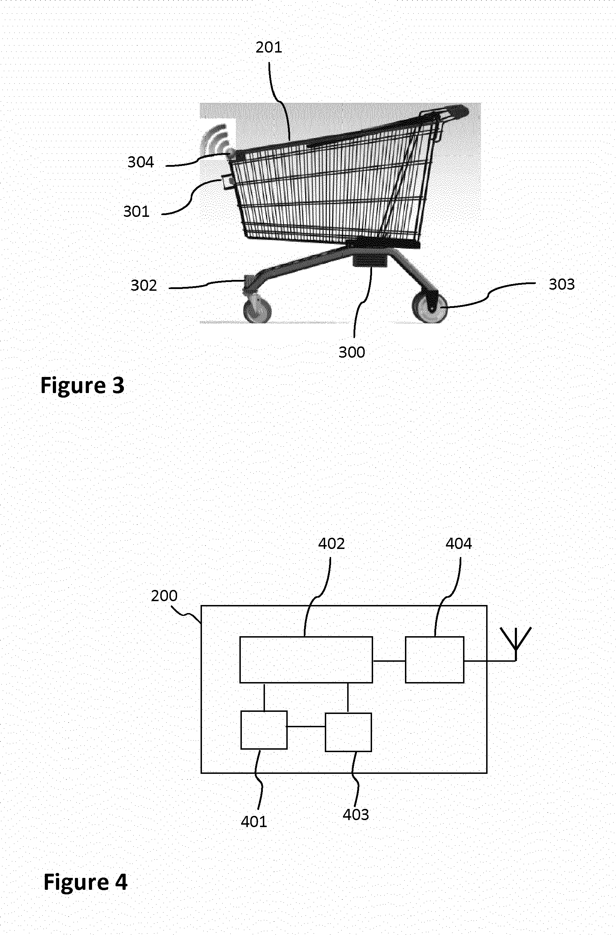

On décrit maintenant, en relation avec la **figure 3****,** un objet mobile autonome configuré pour se déplacer au sol selon un mode de réalisation de l'invention.

Dans ce mode de réalisation, l'objet mobile autonome 201 est un objet mobile autonome roulant. Plus particulièrement, il s'agit d'un chariot de courses tel que rencontré par exemple dans une grande surface du type supermarché.

L'objet mobile autonome 201 est équipé d'un module de communication 304 lui permettant de communiquer avec le serveur de gestion 200. Comme décrit ci-dessus, dans des variantes, cette communication s'établit via un lien radiofréquence, par exemple un lien Bluetooth, WiFi, cellulaire (2G, 3G, 4G...) ou tout lien radiofréquence équivalent. Dans certains modes de réalisation, ce même signal radiofréquence sert à la géolocalisation de l'objet mobile autonome 201 via le système RTLS composé du serveur de géolocalisation 210 et des antennes associées 211, le positionnement pouvant être déterminé par triangulation, par exemple sur la base d'un niveau de signal radiofréquence reçu ou d'un temps d'arrivée. Dans d'autres modes de réalisation, un autre signal radiofréquence est émis dans le même but. Le module de communication 304 peut également inclure un récepteur de géolocalisation du type GNSS, par exemple un récepteur GPS. Le module de communication 304 est alors apte à transmettre la position de l'objet mobile autonome 201 ainsi déterminée au serveur de gestion 200.

Le module de communication 304 est également apte à communiquer avec un module d'autonomie 300 composé d'une batterie et de moyens de pilotage, par exemple une carte informatique apte à :
- mettre en œuvre la communication avec le serveur de gestion 200 via le module de communication 304,
- piloter les différents modules embarqués sur l'objet mobile autonome 201 décrits ci-dessous,
- déterminer les mouvements de déplacement au sol à effectuer sur la base de l'information de déplacement transmise par le serveur de gestion 200 lors de l'étape 102, et reçue par lien radiofréquence via le module de communication 304.

Une telle carte informatique peut être par exemple une carte XU4 telle que proposée par la société Odroid. La batterie quant à elle doit être suffisamment capacitive pour alimenter l'objet mobile autonome 201 pendant une journée entière si possible. Elle ne doit pas être trop encombrante afin que l'objet mobile autonome 201 conserve une de ses fonctionnalités qui consiste en le rangement des objets les uns dans les autres dans le mode de réalisation représenté sur la figure 3. Dans une variante, la batterie est une batterie lithium-ion délivrant 50AH sous 24V.

Le module d'autonomie 300 est également apte à piloter des servomoteurs 302 localisés au niveau des roues avant de manière à pouvoir les piloter. Les servomoteurs 302 ont pour principale contrainte de tourner de manière continue et illimitée dans les deux sens de rotation. Préférentiellement, les servomoteurs 302 ne se bloquent pas lorsqu'ils ne sont plus alimentés en électricité, de manière à permettre le maniement de l'objet mobile autonome 201 lors d'une panne d'alimentation électrique. Dans une variante, les servomoteurs 302 sont des servomoteurs AXADD de référence RS2010MD.

Dans ce mode de réalisation, le module d'autonomie 300 pilote également des motoréducteurs 303 internes aux roues arrières, les motoréducteurs 303 permettant la mise en mouvement de l'objet mobile autonome 201. Dans une variante, les motoréducteurs 303 sont des moteurs sans balais Suzhou Shengyi Motor Co., Ltd. de référence DGW10A-FA délivrant une puissance de 250W.

L'objet mobile autonome 201 comprend un module de détection 301 également piloté par le module d'autonomie 300. Le module de détection 301 permet à l'objet mobile autonome 201 de prendre connaissance de son environnement proche. Dans une variante, le module de détection 301 comprend une caméra 3D stéréoscopique, par exemple une caméra ZED, permettant à l'objet mobile autonome 201 de déterminer une carte de profondeur de son environnement de manière à détecter les obstacles s'y trouvant. Dans une autre variante, le module de détection 301 comprend un lecteur de codes QR (pour « Quick Response » en anglais) permettant de décoder de tels codes QR disposés, par exemple, le long des rayonnages d'une grande surface. De tels codes permettent alors de donner tout type d'informations, comme des informations de positionnement par exemple, à l'objet mobile autonome 201.

Dans un mode de réalisation, l'objet mobile autonome 201 renvoie au serveur de gestion 200, via le lien radiofréquence mis en œuvre par le module de communication 304, toutes les données générées par les dispositifs d'acquisition qu'il embarque, par exemple celles générée par le module de détection 301. Ainsi, le serveur de gestion 200 utilise ces données supplémentaires pour optimiser la détermination de l'information de déplacement lors de l'étape 101.

On décrit maintenant, en relation avec la **figure 4****,** la structure d'un serveur de gestion selon un mode de réalisation particulier de l'invention.

Le serveur de gestion 200 comprend un module radiofréquence 404 permettant de communiquer avec le module de communication 304 intégré à l'objet mobile autonome 201 ainsi qu'avec le terminal 203, cette communication pouvant s'effectuer par exemple via un lien Bluetooth, WiFi, cellulaire (2G, 3G, 4G...) ou tout lien équivalent.

Le serveur de gestion 200 comprend également une mémoire vive 403 (par exemple une mémoire RAM), une unité de traitement 402, équipée par exemple d'un processeur, et pilotée par un programme d'ordinateur stocké dans une mémoire morte 401 (par exemple une mémoire ROM ou un disque dur). A l'initialisation, les instructions de code du programme d'ordinateur sont par exemple chargées dans la mémoire vive 403 avant d'être exécutées par le processeur de l'unité de traitement 402.

Cette figure 4 illustre seulement une manière particulière, parmi plusieurs possibles, de réaliser l'algorithme détaillé ci-dessus, en relation avec la figure 1. En effet, la technique de l'invention se réalise indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. Procédé de gestion de déplacements d'une flotte d'une pluralité d'objets mobiles autonomes configurés pour se déplacer au sol et aptes à communiquer avec un serveur de gestion (200), au moins un objet mobile autonome (201) étant associé à un terminal utilisateur (203) équipant un utilisateur (202),
**caractérisé en ce que** ledit serveur de gestion (200) exécute les étapes suivantes, pour au moins un objet mobile autonome donné, dit premier objet, associé à un premier terminal utilisateur équipant un premier utilisateur:
• obtention (100) d'une information représentative d'une position à atteindre par ledit premier objet, dite information de destination premier objet ;
• détermination (101) d'une information représentative d'un déplacement à effectuer par ledit premier objet, dite information de déplacement premier objet, ladite détermination prenant en compte :
- au moins ladite information de destination premier objet ; et
- au moins une information représentative de la position d'un deuxième terminal utilisateur équipant un deuxième utilisateur associé à un deuxième objet mobile autonome de ladite flotte, dite information de position deuxième utilisateur, et une information représentative de la position dudit deuxième objet mobile autonome, dite information de position deuxième objet ;
• transmission (102) de ladite information de déplacement premier objet audit premier objet,
ladite information de position deuxième utilisateur et ladite information de position deuxième objet correspondant à des données permettant de déterminer respectivement la position dudit deuxième utilisateur et dudit deuxième objet.

2. Procédé de gestion selon la revendication 1,
**caractérisé en ce que** ladite information de destination premier objet appartient au groupe comprenant :
• une information représentative de la position dudit premier terminal utilisateur, dite information de position premier utilisateur ;
• une information représentative de la position d'un article ou d'une zone d'intérêt pour ledit premier utilisateur ;
• une information représentative d'une position résultant de la réponse à un défi transmis audit premier utilisateur.

3. Procédé de gestion selon l'une quelconque des revendications 1 à 2, **caractérisé en ce que** ladite information de déplacement premier objet appartient au groupe comprenant :
• un mouvement de déplacement à effectuer par ledit premier objet ;
• ladite information de destination premier objet.

4. Procédé de gestion selon l'une quelconque des revendications 1 à 3 dans lequel ledit premier objet est également apte à détecter des obstacles,
**caractérisé en ce que** ledit serveur de gestion exécute en outre une étape de réception d'une information représentative de la détection d'au moins un obstacle par ledit premier objet ;
**et en ce que** ladite détermination d'une information de déplacement premier objet prend également en compte ladite information représentative de la détection dudit au moins un obstacle.

5. Procédé de gestion selon l'une quelconque des revendications 1 à 4, **caractérisé en ce que** ledit serveur de gestion exécute en outre une étape de transmission d'une information opérationnelle audit premier objet et/ou audit premier terminal utilisateur, ladite information opérationnelle appartenant au groupe comprenant :
• Une offre commerciale sur un produit localisé à proximité dudit premier utilisateur ;
• Une information d'intérêt pour ledit premier utilisateur en lien avec un profil associé ;
• Une alerte associée à un évènement survenu à proximité dudit premier utilisateur.

6. Procédé de déplacement d'un objet mobile autonome configuré pour se déplacer au sol, le procédé comprenant les étapes de :
• réception d'une information de déplacement à effectuer ;
• déplacement dudit objet mobile autonome, ledit déplacement prenant en compte ladite information de déplacement à effectuer ;
**caractérisé en ce que** ladite information de déplacement à effectuer correspond à une information de déplacement premier objet obtenue par la mise en œuvre d'un procédé de gestion de déplacements d'une flotte d'une pluralité d'objets mobiles autonomes selon l'une quelconque des revendications 1 à 5 par ledit serveur de gestion.

7. Produit programme d'ordinateur, comprenant des instructions de code de programme pour la mise en œuvre d'un procédé selon l'une quelconque des revendications 1 à 6, lorsque ledit programme est exécuté par un processeur.

8. Serveur de gestion de déplacements d'une flotte d'une pluralité d'objets mobiles autonomes configurés pour se déplacer au sol et aptes à communiquer avec un serveur de gestion, au moins un objet mobile autonome étant associé à un terminal utilisateur équipant un utilisateur,
**caractérisé en ce qu'**il comprend :
• des moyens d'obtention d'au moins une information représentative d'une position à atteindre par un premier objet mobile autonome de ladite flotte, dite information de destination premier objet ;
• des moyens de détermination d'une information représentative d'un déplacement à effectuer par ledit premier objet mobile autonome, dite information de déplacement premier objet, lesdits moyens de détermination étant aptes à prendre en compte :
- au moins ladite information de destination premier objet ; et
- au moins une information représentative de la position d'un deuxième terminal utilisateur équipant un deuxième utilisateur associé à un deuxième objet mobile autonome de ladite flotte, dite information de position deuxième utilisateur, et une information représentative de la position dudit deuxième objet mobile autonome, dite information de position deuxième objet ;
• des moyens de transmission de ladite information de déplacement premier objet audit premier objet mobile autonome,
ladite information de position deuxième utilisateur et ladite information de position deuxième objet correspondant à des données permettant de déterminer respectivement la position dudit deuxième utilisateur et dudit deuxième objet.

9. Système **caractérisé en ce qu'**il comprend :
• un serveur de gestion selon la revendication 8 ; et
• au moins un objet mobile autonome configuré pour se déplacer au sol comprenant :
∘ des moyens de réception d'une information de déplacement à effectuer ;
∘ des moyens de déplacement dudit objet mobile autonome, et des moyens de prise en compte de ladite information de déplacement à effectuer ; et
∘ des moyens de communiquer avec ledit serveur de gestion, ladite information de déplacement à effectuer correspondant à ladite information de déplacement premier objet déterminée par lesdits moyens de détermination.

## Patentansprüche

1. Verfahren zur Verwaltung von Fortbewegungen einer Flotte einer Mehrzahl von autonomen mobilen Objekten, die dazu eingerichtet sind, um sich am Boden fortzubewegen, und die geeignet sind, mit einem Management-Server (200) zu kommunizieren, wobei mindestens ein autonomes mobiles Objekt (201) einem einen Nutzer (202) ausstattenden Nutzerendgerät (203) zugeordnet ist,
**dadurch gekennzeichnet, dass** der Management-Server (200) die folgenden Schritte für mindestens ein vorgegebenes autonomes mobiles Objekt, genannt erstes Objekt, ausführt, das einem einen ersten Nutzer (202) ausstattenden ersten Nutzerendgerät zugeordnet ist:
• Gewinnung (100) einer Information, die für eine durch das erste Objekt zu erreichende Position repräsentativ ist, genannt Erstes-Objekt-Zielinformation;
• Ermittlung (101) einer Information, die für eine durch das erste Objekt durchzuführende Fortbewegung repräsentativ ist, genannt Erstes-Objekt-Fortbewegungsinformation, wobei die Ermittlung berücksichtigt:
- mindestens die Erstes-Objekt-Zielinformation und
- mindestens eine Information, die repräsentativ ist für die Position eines zweiten Nutzerendgeräts, das einen zweiten Nutzer ausstattet, der einem zweiten autonomen mobilen Objekt der Flotte zugeordnet ist, genannt Zweiter-Nutzer-Positionsinformation, und eine Information, die für die Position des zweiten autonomen mobilen Objekts repräsentativ ist, genannt Zweites-Objekt-Positionsinformation;
• Übermittlung (102) der Erstes-Objekt-Fortbewegungsinformation an das erste Objekt,
wobei die Zweiter-Nutzer-Positionsinformation und die Zweites-Objekt-Positionsinformation Daten entsprechen, die es ermöglichen, die Position des zweiten Nutzers bzw. des zweiten Objekts zu ermitteln.

2. Verwaltungsverfahren nach Anspruch 1,
**dadurch gekennzeichnet, dass** die Erstes-Objekt-Zielinformation der Gruppe angehört, die umfasst:
• eine Information, die für die Position des ersten Nutzerendgeräts repräsentativ ist, genannt Erster-Nutzer-Positionsinformation,
• eine Information, die für die Position eines Artikels oder einer für den ersten Nutzer interessanten Zone repräsentativ ist,
• eine Information, die für eine Position repräsentativ ist, die sich aus der Antwort auf eine an den ersten Nutzer übermittelte Herausforderung ergibt.

3. Verwaltungsverfahren nach einem beliebigen der Ansprüche 1 bis 2,
**dadurch gekennzeichnet, dass** die Erstes-Objekt-Fortbewegungsinformation der Gruppe angehört, die umfasst:
• eine Bewegung für eine Fortbewegung, die durch das erste Objekt durchzuführen ist,
• die Erstes-Objekt-Zielinformation.

4. Verwaltungsverfahren nach einem beliebigen der Ansprüche 1 bis 3, bei dem das erste Objekt außerdem geeignet ist, Hindernisse zu erkennen,
**dadurch gekennzeichnet, dass** der Management-Server ferner einen Schritt des Empfangs einer Information ausführt, die für die Erkennung mindestens eines Hindernisses durch das erste Objekt repräsentativ ist;
und dass die Ermittlung einer Erstes-Objekt-Fortbewegungsinformation auch die für die Erkennung des mindestens einen Hindernisses repräsentativen Information berücksichtigt.

5. Verwaltungsverfahren nach einem beliebigen der Ansprüche 1 bis 4,
**dadurch gekennzeichnet, dass** der Management-Server ferner einen Schritt der Übermittlung einer operativen Information an das erste Objekt und/oder an das erste Nutzerendgerät ausführt, wobei die operative Information der Gruppe angehört, die umfasst:
• ein kommerzielles Angebot für ein Produkt, das sich in der Nähe des ersten Nutzers befindet,
• eine für den ersten Nutzer interessante Information in Verbindung mit einem zugeordneten Profil,
• einen Alarm, der einem Ereignis zugeordnet ist, das in der Nähe des ersten Nutzers eingetreten ist.

6. Verfahren für die Fortbewegung eines autonomen mobilen Objektes, das eingerichtet ist, um sich am Boden fortzubewegen, wobei das Verfahren die folgenden Schritte umfasst:
• Empfang einer Information über eine durchzuführende Fortbewegung,
• Fortbewegung des autonomen mobilen Objekts, wobei die Fortbewegung die Information über eine durchzuführende Fortbewegung berücksichtigt,
**dadurch gekennzeichnet, dass** die Information über eine durchzuführende Fortbewegung einer Erstes-Objekt-Fortbewegungsinformation entspricht, die durch Umsetzen eines Verfahrens für die Verwaltung von Fortbewegungen einer Flotte einer Mehrzahl autonomer mobiler Objekte gemäß einem beliebigen der Anspruche 1 bis 5 durch den Management-Server entspricht.

7. Computerprogrammprodukt mit Programmcodebefehlen für die Umsetzung eines Verfahrens gemäß einem beliebigen der Anspruche 1 bis 6, wenn das Programm durch einen Prozessor ausgeführt wird.

8. Server für die Verwaltung von Fortbewegungen einer Flotte einer Mehrzahl autonomer mobiler Objekte, die dazu eingerichtet sind, um sich am Boden fortzubewegen, und die geeignet sind, mit einem Management-Server zu kommunizieren, wobei mindestens ein autonomes mobiles Objekt einem einen Nutzer ausstattenden Nutzerendgerät zugeordnet ist,
**dadurch gekennzeichnet, dass** er umfasst:
• Mittel, um mindestens eine Information zu gewinnen, die für eine durch ein erstes autonomes mobiles Objekt der Flotte zu erreichende Position repräsentativ ist, genannt Erstes-Objekt-Zielinformation;
• Mittel, um eine Information zu ermitteln, die für eine durch das erste autonome mobile Objekt durchzuführende Fortbewegung repräsentativ ist, genannt Erstes-Objekt-Fortbewegungsinformation, wobei die Ermittlungsmittel geeignet sind,
- mindestens die Erstes-Objekt-Zielinformation und
- mindestens eine Information, die repräsentativ ist für die Position eines zweiten Nutzerendgeräts, das einen zweiten Nutzer ausstattet, der einem zweiten autonomen mobilen Objekt der Flotte zugeordnet ist, genannt Zweiter-Nutzer-Positionsinformation, und eine Information, die für die Position des zweiten autonomen mobilen Objekts repräsentativ ist, genannt Zweites-Objekt-Positionsinformation, zu berücksichtigen;
• Mittel für die Übermittlung der Erstes-Objekt-Fortbewegungsinformation an das erste autonome mobile Objekt,
wobei die Zweiter-Nutzer-Positionsinformation und die Zweites-Objekt-Positionsinformation Daten entsprechen, die es ermöglichen, die Position des zweiten Nutzers bzw. des zweiten Objekts zu ermitteln.

9. System, **dadurch gekennzeichnet, dass** es umfasst:
• einen Management-Server nach Anspruch 8 und
• mindestens ein autonomes mobiles Objekt, das eingerichtet ist, um sich am Boden fortzubewegen, umfassend:
∘ Mittel für den Empfang einer Information über eine durchzuführende Fortbewegung;
∘ Mittel für die Fortbewegung des autonomen mobilen Objekts und Mittel für die Berücksichtigung der Information über die durchzuführende Fortbewegung und
∘ Mittel für die Kommunikation mit dem Management-Server, wobei die Information über die durchzuführende Fortbewegung der durch die Ermittlungsmittel ermittelten Erstes-Objekt-Fortbewegungsinformation entspricht.

## Claims

1. Method for managing movements of a fleet of a plurality of autonomous mobile objects configured to move on the ground and capable of communicating with a management server (200), an autonomous mobile object (201) being associated with a user terminal (203) with which a user (202) is equipped,
**characterised in that** said management server (200) performs the following steps, for at least a given autonomous mobile object, referred to as first object, associated with a first user terminal with which a first user is equipped:
• obtaining (100) information representing a position to be reached by said first object, referred to as first object destination information;
• determining (101) information representing a movement to be made by said first object, referred to as first object movement information, said determination taking into account:
- at least said first object destination information; and
- at least one piece of information representing the position of a second user terminal with which a second user associated with a second autonomous mobile object of said fleet is equipped, referred to as second user position information, and information representing the position of said second autonomous mobile object, referred to as second object position information;
• transmitting (102) said first object movement information to said first object, said second user position information and said second object position information corresponding to data enabling the position of the second user and of the second object to be respectively determined.

2. Management method according to claim 1,
**characterised in that** said first object destination information belongs to the group comprising:
• information representing the position of the first user terminal, referred to as first user position information;
• information representing the position of an article or an area of interest for the first user;
• information representing a position resulting from the response to a challenge transmitted to said first user.

3. Management method according to any one of claims 1 to 2,
**characterised in that** said first object movement information belongs to the group comprising:
• a displacement movement to be made by the first object;
• said first object destination information.

4. Management method according to any one of claims 1 to 3, wherein the first object is also capable of detecting obstacles,
**characterised in that** the management server also performs a step of receiving information representing the detection of at least one obstacle by the first object;
**and in that** said determination of first object movement information also takes into account said information representative of the detection of said at least one obstacle.

5. Management method according to any one of claims 1 to 4,
**characterised in that** the management server also performs a step of transmitting operational information to the first object and/or to the first user terminal, said operational information belonging to the group comprising:
• a commercial offer on a product located in the vicinity of the first user;
• information of interest for the first user linked with an associated profile;
• an alert associated with an event occurring in the vicinity of the first user.

6. Method for moving an autonomous mobile object configured to move on the ground, the method comprising the steps of:
• receiving information on movement to be made;
• movement of said autonomous mobile object, said movement taking into account said information on movement to be made;
**characterised in that** said information on movement to be made corresponds to a first object movement information obtained by implementing a method for managing movements of a fleet of a plurality of autonomous mobile objects, according to any one of claims 1 to 5 by said management server.

7. Computer program product, comprising program code instructions for implementing a method according to any one of claims 1 to 6, when said program is executed by a processor.

8. Server for managing movements of a fleet of a plurality of autonomous mobile objects configured to move on the ground and capable of communicating with a management server, at least an autonomous mobile object being associated with a user terminal with which a user is equipped,
**characterised in that** it comprises:
• means for obtaining at least one piece of information representing a position to be reached by a first autonomous mobile object of said fleet, referred to as first object destination information;
• means for determining information representing a movement to be made by said first autonomous mobile object, referred to as first object movement information, said determination means being able to take into account:
- at least said first object destination information; and
- at least one piece of information representing the position of a second user terminal with which a second user associated with a second autonomous mobile object of said fleet is equipped, referred to as second user position information, and information representing the position of said second autonomous mobile object, referred to as second object position information;
• means for transmitting said first object movement information to said first autonomous mobile object,
said second user position information and said second object position information corresponding to data enabling the position of the second user and of the second object to be respectively determined.

9. System **characterised in that** it comprises:
• a management server according to claim 8,
• at least an autonomous mobile object configured to move on the ground, comprising:
∘ means for receiving information on movement to be made;
∘ means for moving said autonomous mobile object, and means for taking into account said information on movement to be made; and
∘ means for communicating with said management server, said information on movement to be made corresponding to said first object movement information determined by said determination means.
